Europäisches Patentamt

European Patent Office

Office européen des brevets

(19)

(11) Numéro de publication : **0 077 857**
**B1**

(12) **FASCICULE DE BREVET EUROPÉEN**

(45) Date de publication du fascicule du brevet :
**30.07.86**

(21) Numéro de dépôt : **81401712.5**

(22) Date de dépôt : **27.10.81**

(51) Int. Cl.[4] : **B 32 B 15/04**, B 32 B 17/06,
C 23 D 5/04, C 03 C 17/02,
C 04 B 41/45

(54) Emaillage d'un substrat avec un verre fluoré.

(43) Date de publication de la demande :
**04.05.83 Bulletin 83/18**

(45) Mention de la délivrance du brevet :
**30.07.86 Bulletin 86/31**

(84) Etats contractants désignés :
**DE FR GB**

(56) Documents cités :
EP-A- 0 017 566
CH-A- 489 368
DE-A- 1 923 980
DE-B- 1 267 057
FR-A- 776 435
FR-A- 1 001 986
FR-A- 2 059 732
FR-A- 2 388 897
FR-A- 2 395 328
GB-A- 1 147 544
US-A- 2 212 162
IBM TECHNICAL DISCLOSURE BULLETIN, vol. 14, no. 7, décembre 1971, NEW YORK (US), SWIE-IN TAN: "Glass coating of electronic components", page 2168
ELECTRONICS LETTERS, vol. 17, no. 17, 20-08-1981, LONDRES (GB), S. MITACHI: "Fluoride-glass-cladded optical fibres for mid-infra-red ray transmission", pages 591-592

(73) Titulaire : **Le verre fluoré S.A.**
**Z.I. du Champ Martin Vern-sur-Seiche**
**F-35230 St Erblon (FR)**

(72) Inventeur : **Maze, Gwendael**
**1, rue de Brilhac**
**F-35000 Rennes (FR)**
Inventeur : **Poulain, Marcel**
**33, Boulevard Charles Péguy**
**F-35000 Rennes (FR)**
Inventeur : **Carre, Jean-Yves**
**Le Quillio**
**F-22400 Uzel (FR)**

(74) Mandataire : **Le Guen, Louis François**
**Cabinet Louis Le Guen 1, avenue Edouard VII B.P. 91**
**F-35802 Dinard Cédex (FR)**

# 0 077 857

## Description

La présente invention se rapporte à divers procédés d'émaillage de supports métalliques, cristallins, vitreux ou céramiques par des verres de fluorures.

Les matériaux vitreux présentent en effet de nombreux avantages tels que la continuité du milieu, une porosité négligeable, des propriétés diélectriques, et, généralement, une grande inertie chimique. Leurs qualités mécaniques, résistance aux chocs et à la traction, ainsi que la conductibilité thermique sont, en revanche, médiocres et imposent, de ce fait, des limites sévères aux réalisations pratiques.

L'émaillage de supports métalliques, bien qu'ayant fait l'objet, ces dernières années, de mises au point nombreuses, fait couramment appel à des techniques traditionnelles remontant au-delà de l'ère industrielle. Le processus comporte généralement plusieurs étapes : la préparation de la surface, la dispersion du matériaux sur le métal, la cuisson et le refroidissement. Ce mode opératoire est bien adapté aux émaux traditionnels dérivant directement des verres silicatés classiques. Ceux-ci ne subissent pas d'altération sensible du fait de l'humidité. De plus, la vitrification de l'émail se produit spontanément avec la montée en température, et ce de façon quasi irréversible : la recristallisation complète de la matrice vitreuse demande en effet des temps très longs aux températures où l'on opère habituellement.

Dans les documents FR-A-2 395 328 et FR-A-2 388 897, sont décrits des procédés d'émaillage de métaux par trempage de pièces métalliques dans des bains de verres de silicate. Toutefois, ces procédés ne sont pas applicables aux verres fluorés, c'est-à-dire comportant uniquement des anions $F^-$, car les températures envisagées pour les bains fondus sont trop élevés.

Dans le cas des verres fluorés, tels que décrits dans les brevets français 7 618 878, 7 709 618, 7 907 785 et 8 006 088, il n'est pas possible de réaliser des revêtements émaillés en utilisant les mêmes techniques. En effet, outre les phénomènes d'hydrolyse à température élevée, une vitesse de recristallisation excessive inhibe la vitrification de l'émail de verre de fluorures. Celui-ci devient alors hétérogénèse et poreux. Ces verres sont constitués essentiellement de fluorures $MF_4$ (M = Zr, Hf, Th, Ti, U), $MF_3$ (M = Al, Cr, Fe, Ga, Ln, Y), $MF_2$ (M = métal de transition 3d, Mg, Zn), seuls ou en combinaison, associés éventuellement avec un ou plusieurs fluorures alcalins, alcalino-terreux ou équivalents, tels que les fluorures de Pb, Tl, Bi, Eu (II).

La présente invention vise à conserver au revêtement, suivant l'invention, un taux de vitrification très élevé de telle sorte que la surface obtenue présente des caractéristiques physicochimiques voisines de celles des verres de fluorures précités. Pour atteindre ce résultat, il faut que le matériau constituant de l'émail de verre de fluorure franchisse rapidement l'intervalle thermique séparant la fusion, d'une part, et la température de transition vitreuse, d'autre part. Il faut, en outre, que la température du support métallique soit assez élevée pour que le processus physicochimique à l'interface verre/métal conduise à un accrochage correct.

On est ainsi amené à définir une température d'accrochage au-dessous de laquelle on n'observe qu'une simple adhérence physique et relevant au plan chimique des interactions de Van der Waals, sans formation de liaisons chimiques au sein de l'interface. La réactivité particulière des mélanges de fluorures fondus qui, par ailleurs, pose des problèmes aigus de corrosion, constitue ici un élément favorable en ce qu'elle diminue en général la température d'accrochage bien en deçà de la température de fusion du verre. D'autre part, ces verres de fluorures présentent habituellement une viscosité très faible à la température de liquidus, ce qui explique indirectement leur tendance très élevée à la recristallisation. Cette caractéristique à *priori* défavorable présente cependant l'avantage de rendre concevable des procédés d'application irréalisables avec des matériaux classiques.

Dans son mode élémentaire, un procédé, suivant la présente invention, consiste à appliquer le verre de fluorure en fusion sur le substrat de telle sorte que le verre fondu soit à une température supérieure ou égale à la température de liquidus, et que le support soit maintenu à une température inférieure à celle-ci et aussi proche que possible de la transition vitreuse. De cette façon, la solidification du revêtement s'opère immédiatement au contact du substrat. L'émail ainsi obtenu se refroidit rapidement par conduction thermique jusqu'à ce que l'on atteigne un état d'équilibre entre la température décroissante de l'émail et la température croissante du substrat. A ce stade, le refroidissement de l'ensemble est assuré par les échanges thermiques, soit vers l'extérieur, soit avec une enceinte dont la température est contrôlée et programmée. Comme on se situe alors au-dessus de la température de transition vitreuse, le revêtement présente une viscosité assez basse et donc assez de plasticité pour éviter que les contraintes mécaniques excessives ne se manifestent. Le même résultat est obtenu si le verre est apporté non pas en phase liquide, mais en phase vapeur : dans ce cas, c'est la température du substrat qui constitue l'élément de contrôle essentiel.

Tout procédé d'application doit respecter ces conditions qui tiennent à la nature particulière des verres utilisés pour le revêtement. Ces conditions valent pour tous les verres dont la viscosité à la fusion est faible, même si leur vitesse de recristallisation est élevée. C'est en particulier le cas des verres dérivés des fluorures de zirconium, hafnium, métaux de transition, terres rares ou actinides. Tous ces verres présentent une température de fusion faible, les opérations peuvent habituellement être conduites dans un domaine de température n'excédant pas 600 à 700 °C, ce qui facilite leur mise en œuvre technologique.

2

Le choix de la composition vitreuse dépend naturellement de la nature du substrat. Outre les critères bien connus de compatibilité des coefficients de dilatation, on doit veiller à ce que la température du verre en fusion ne provoque pas d'altérations irréversibles du substrat telles que fusion ou déformations inélastiques. Il existe par ailleurs un seuil thermique à partir duquel un accrochage satisfaisant se réalise entre l'émail et le substrat. Il est en général préférable que ce seuil se situe dans une zone où la vitesse de recristallisation du verre est assez faible, c'est-à-dire en pratique au-dessous de la température de cristallisation mise en évidence par analyse thermique différentielle.

La méthode d'application qui vient d'être décrite peut être mise en œuvre de plusieurs façons, aboutissant à des procédés qui, bien que différents dans leur réalisation, procèdent tous de la présente invention. Il s'agit des procédés :

par immersion,

par coulage,

par projection de verre fondu,

par fusion d'arc, et

par évaporation sous vide.

Un premier procédé suivant l'invention consiste à plonger la pièce à revêtir dans du verre de fluorures en fusion, puis à la ressortir et à la laisser refroidir dans des conditions appropriées. Cette technique, qui est rendue possible par la faible viscosité des verres de fluorures, est bien adaptée au traitement de pièces de dimension réduite, et ne présente pas d'inconvénients majeurs si la température du bain de verre n'est pas excessive pour le substrat.

A titre d'exemple, une plaquette d'aluminium de 4 cm $\times$ 8 cm a été immergée durant trois secondes à 570 °C dans un verre de composition :

$$ZrF_4 \ 54\ \% \quad BaF_2 \ 29\ \% \quad LaF_3 \ 3\ \% \quad NaF \ 10\ \% \quad AlF_3 \ 4\ \%$$

Le métal avait été préchauffé à 340 °C. Le refroidissement avait été effectué à l'air ambiant, sans précaution particulière. L'épaisseur du revêtement obtenu a été de 800 μm en moyenne.

Une variante de ce premier procédé se rapporte aux pièces longues, dont la section est constante et invariante sur toute la longueur : fils, cylindres, lames et profilés divers. On fait simplement passer la pièce dans un récipient rempli de verre à travers un orifice de géométrie adaptée. On peut, par exemple, réaliser un creuset d'immersion comportant à sa partie inférieure une ouverture qui corresponde exactement à la section du profilé à revêtir, mais agrandie de 0,1 à 1 mm sur toutes les limites du pourtour. Le creuset rempli de verre en fusion et la pièce convenablement préchauffée sont alors déplacés relativement l'un par rapport à l'autre, de telle sorte que l'ensemble de la pièce passe à travers l'ouverture du fond du creuset. Celui-ci étant supposé vertical, l'épaisseur du revêtement est réglée par la tension superficielle et la température du verre si l'émaillage se fait de haut en bas, et par les dimensions de l'orifice de sortie si l'opération est réalisée de bas en haut, c'est-à-dire si la partie émaillée sort par le fond du creuset. Un profilé en U de 5 mm d'épaisseur, 5 cm de côté et de 1,5 m de long en alliage d'aluminium AU4G a ainsi été revêtu d'un verre de composition :

$$ZrF_4 \ 57\ \% \qquad BaF_2 \ 34\ \% \qquad LaF \ 5\ \% \qquad AlF_3 \ 4\ \%$$

contenu dans un creuset de graphite de 500 cm$^3$ à 620 °C et comportant, à sa partie inférieure, une ouverture similaire en U de 6 mm d'épaisseur et de 5,1 cm de côté. Le profilé préchauffé à 400 °C étant maintenu fixe en position verticale, le creuset et son dispositif de chauffage ont été déplacés de bas en haut à une vitesse de 10 cm/s. Une plaque amovible placée sous le creuset empêche le verre de s'écouler avant l'introduction du profilé, l'épaisseur du revêtement était de 400 μm en moyenne.

Un second procédé suivant l'invention consiste à couler le verre de fluorures en fusion sur la pièce préalablement préchauffée. Lorsqu'il s'agit d'émailler l'intérieur d'un récipient, un mode opératoire particulièrement simple et efficace consiste à remplir ce récipient de verre fondu, puis à le vider. Il subsiste, après l'opération, une couche de verre dont l'épaisseur dépend essentiellement des températures du verre liquide et du substrat. Dans le cas où le volume du récipient nécessiterait l'emploi de quantités importantes de verre fondu, on peut obtenir un résultat satisfaisant en coulant le verre en fusion le long des parois et en conférant au récipient un mouvement de rotation convenable, de telle sorte que le verre fondu soit maintenu sur les parois et s'y étale par centrifugation. Ce procédé convient particulièrement aux pièces dont la géométrie est sensiblement de révolution par rapport à un axe.

A titre d'exemple de réalisation par coulage, un tube carré d'aluminium de section intérieure 50 $\times$ 50 mm a été émaillé intérieurement sur une hauteur de 10 cm par coulage d'un verre de composition :

$$ZrF_4 \ 57\ \% \quad BaF_2 \ 34\ \% \quad LaF_3 \ 5\ \% \quad AlF_3 \ 4\ \%$$

à 620 °C, puis évacuation de celui-ci. Le tube était initialement à une température de 350 °C. Un tube d'aluminium AU4G, de diamètre intérieur 20 mm, a été émaillé intérieurement sur une hauteur de 25 cm dans des conditions identiques.

3

Comme autre exemple, un pot d'acier inoxydable d'un diamètre de 6 cm, et de hauteur 12 cm, a été émaillé par coulage à 800 °C d'un verre de composition :

$AlF_3$ 30 %     $YF_3$ 30 %     $BaF_2$ 20 %     $ThF_4$ 20 %

le long des parois. Le pot était animé d'une vitesse de rotation de 80 tours par minute et sa température était de 420 °C. L'épaisseur du revêtement obtenu sur les parois a été de 700 µm.

Un troisième procédé, suivant l'invention, consiste à projeter le verre en fusion sur la pièce à revêtir dans des conditions de température et d'ambiance appropriées. Le verre en fusion ne se présente plus alors comme une masse liquide au repos ou en mouvement, mais comme un ensemble de gouttelettes fondues animé d'une vitesse pouvant être ajustée et venant s'aplatir sur la pièce à revêtir. Ce procédé de mise en œuvre plus délicat présente l'avantage de permettre un contrôle plus précis de la quantité de verre déposée par unité de surface. Elle autorise de plus des écarts de température plus conséquents entre le verre fondu et le substrat et augmente l'effet de trempe, ce qui rend possible l'emploi de compositions vitreuses peu stables vis-à-vis de la dévitrification.

Ce procédé peut être mis en œuvre de plusieurs façons différentes, suivant que l'on utilise du verre fondu ou du verre en poudre.

A partir du verre fondu, une première possibilité consiste à entraîner et à disperser ledit verre en fusion au moyen d'un flux gazeux de température contrôlée. Un dispositif suivant l'invention, utilisable pour mettre en œuvre ce procédé comporte alors trois parties principales : un réservoir contenant le verre en fusion à une température ajustable, un générateur de gaz chaud, un dispositif comportant les amenées de gaz et de verre liquide où s'opère la dispersion du verre. Le débit de verre liquide peut être ajusté par la taille et la géométrie des orifices de sortie. Il dépend évidemment de la viscosité du verre à la température considérée. L'entraînement du liquide peut être assuré, soit par le seul effet d'aspiration de flux gazeux de pression et de température ajustables, soit aussi par la pression du verre à l'entrée de l'orifice de sortie, cette pression pouvant résulter simplement de la pesanteur si l'orifice est situé au bas du réservoir, ou d'une pression gazeuse ou mécanique appliquée à la surface du mélange fondu. Le flux gazeux peut être de l'air éventuellement déshydraté, ou encore un gaz inerte : azote, argon, gaz rare. Sa température est en général maintenue supérieure ou égale à 600 °C afin d'éviter la solidification du verre dans les amenées et le dispositif de sortie. Celui-ci est réalisé de telle sorte que le flux gazeux passe suffisamment près de l'orifice d'amenée du verre pour y créer une dépression et disperser le verre liquide à l'état de fines gouttelettes. Il ne diffère pas en son principe des dispositifs classiques de projection de peinture, mais impose des contraintes spécifiques dans sa réalisation, du fait de la température de fonctionnement et du comportement chimique particulier des mélanges de fluorures fondus.

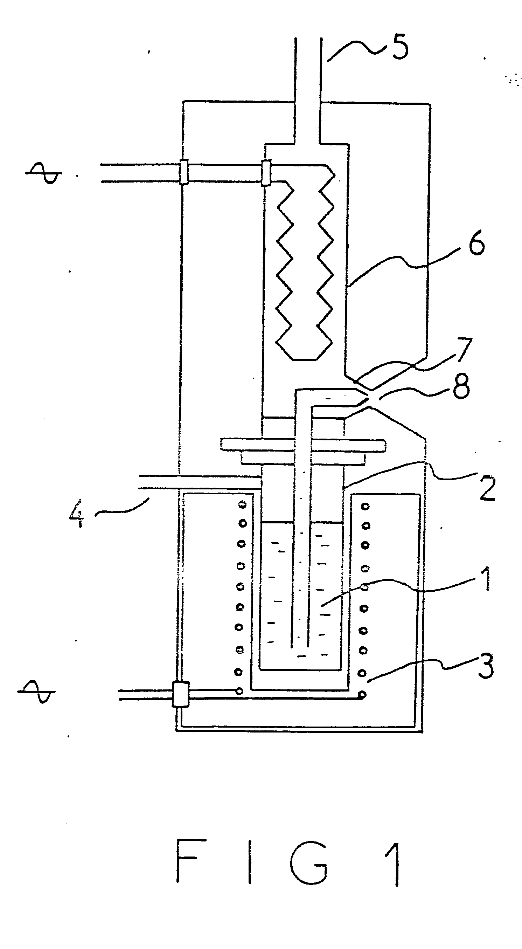

La Fig. 1 illustre un mode de réalisation particulier, mais nullement limitatif, d'un tel appareil de projection de verre de fluorures fondu par entraînement gazeux pouvant être utilisé pour l'émaillage. Le verre de fluorures en fusion 1 est contenu dans un réservoir en nickel 2 maintenu à température convenable par un système de chauffage 3. La pression gazeuse au-dessus du bain est contrôlée par l'intermédiaire d'un conduit 4, ce qui permet de mettre le verre en surpression ou en dépression par rapport à la pression atmosphérique. Le gaz vecteur est introduit par une entrée 5 et traverse une zone de chauffage 6 avant d'arriver dans une buse d'échappement 7, dispersant et entraînant le verre fondu provenant d'un gicleur 8, placé au centre de la buse.

Toujours à partir du verre fondu, un autre procédé consiste à appliquer au verre de fluorures en fusion une pression suffisante pour le contraindre à passer à travers un orifice de sortie très fin, ce qui provoque la dispersion du liquide à l'état de fines gouttelettes animées d'une énergie cinétique convenable, sans l'aide de flux gazeux extérieur. Plus simple dans son principe, cette variante suppose l'emploi de pressions importantes associées à une température d'utilisation élevée : le verre en fusion est fréquemment porté au-dessus de 600 °C. Il est nécessaire que les parties chaudes de l'appareil ne soient soumises qu'à des contraintes de pression très limitées et que l'enceinte sous pression soit maintenue à une température voisine de l'ambiante. Ceci peut être réalisé pratiquement en incorporant le récipient contenant le verre de fluorures fondu et le four servant à le chauffer dans une enceinte plus vaste refroidie extérieurement à une température assez basse pour lui conférer une résistance mécanique convenable.

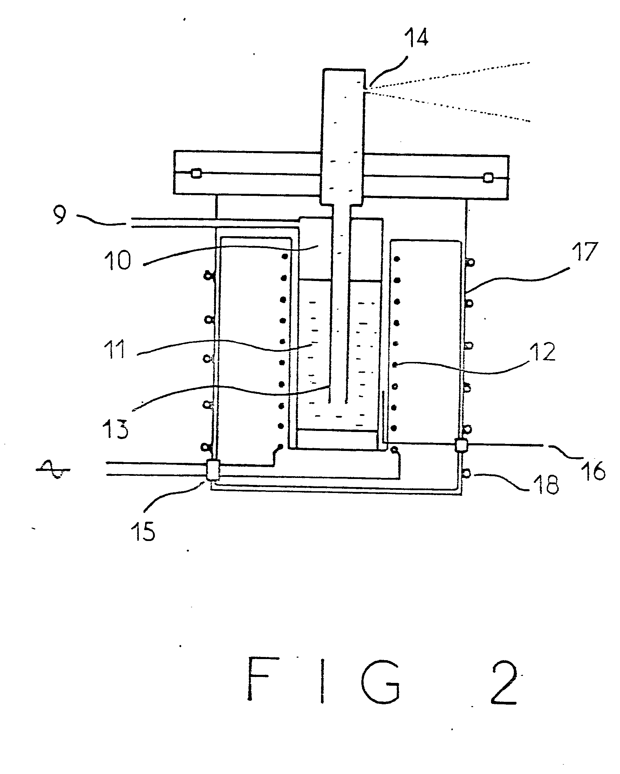

La Fig. 2 montre, à titre d'exemple indicatif et nullement limitatif, un mode de réalisation de l'invention suivant cet aspect. De l'argon comprimé à une pression de 100 bars est introduit par une entrée 9 dans une enceinte 10. La pression appliquée à la surface du verre 11, maintenu en fusion par un dispositif de chauffage 12 convenablement isolé thermiquement, force le liquide à monter à travers un conduit 13 jusqu'à un orifice 14 de diamètre 50 µm. L'alimentation électrique du four 12 est réalisée au moyen de passages isolants 15 et la température contrôlée par un thermocouple 16 tandis qu'une enceinte extérieure 17, entourant complètement l'enceinte 10 et le four 12, est refroidie par une circulation d'eau 18. Ce dispositif a permis l'émaillage d'une plaque d'aluminium de dimensions 50 cm × 30 cm avec un verre de composition analogue à celle de l'exemple précédent. Le verre en fusion était à une température de 650 °C et la plaque a été préchauffée à 360 °C.

Ces deux derniers dispositifs de projection de verre fondu peuvent être couplés dans le cas de supports conducteurs à un système électrostatique facilitant la répartition homogène de gouttelettes sur la cible. Pour ce faire, on place une pièce métallique portée à un potentiel très élevé par rapport au

4

système de projection entre ce dernier et le support à revêtir. Cette pièce peut, par exemple, être constituée par un anneau relié à un générateur électrostatique. On peut également porter la pièce à revêtir à une tension différente de celle du système de projection. Si la géométrie le permet, cette tension peut atteindre des valeurs très élevées et l'usage de l'anneau intermédiaire est alors facultatif.

Un autre procédé de projection de verre fondu consiste, à partir de verre en poudre de granulométrie contrôlée, à porter celui-ci rapidement jusqu'à la fusion immédiatement avant son application sur le substrat. L'apport de chaleur nécessaire à cette fusion peut être réalisé de deux façons différentes : soit au moyen d'un plasma chaud entretenu par un générateur approprié, soit par la combustion de gaz convenablement choisis en proportions adéquates. Dans ce dernier cas, l'utilisation de l'oxygène comme comburant entraîne la formation de vapeur d'eau à haute température, et donc une hydrolyse partielle du verre. Il s'avère en fait que la vitesse d'attaque du verre par la vapeur d'eau est suffisamment faible pour que le revêtement obtenu présente un taux de vitrification acceptable. L'apport de réactifs chimiques dans le flux gazeux permet de réduire encore l'importance de l'hydrolyse. On peut citer, à titre d'exemple, le tétrachlorure de carbone, le trichloréthylène ou le fluorochlorure de carbone $C_2F_2Cl_2$, et plus généralement les hydrocarbures dont tout ou partie des hydrogènes a été substituée par des halogènes. La mise en œuvre de ce procédé d'émaillage suivant l'invention peut être effectuée simplement en utilisant des dispositifs commercialisés en vue de la métallisation à l'aide de poudres métalliques, les résultats les meilleurs étant obtenus lorsque les gaz admis à l'entrée de ces dispositifs sont préalablement déshydratés. Plusieurs dizaines d'éprouvettes en aluminium et acier ont été revêtues d'un verre de composition molaire :

$ZrF_4$ 50 % NaF 22,5 % $BaF_2$ 20 % $ThF_4$ 7,5 %

à l'aide d'un pistolet commercialisé par la Société Nationale de Métallisation Industrielle (SNMI) sous le nom commercial de JET PMR, fonctionnant avec du propane, de l'oxygène et de l'air comprimé, et avec une granulométrie de poudre de 80-100 µm. L'oxygène admis entraînait du tétrachlorure de carbone à sa pression de vapeur saturante à 25 °C. L'utilisation d'une torche à plasma pour la fusion de la poudre de verre avant son application sur le substrat permet d'obtenir un taux de vitrification bien supérieur à celui qu'on obtient avec une torche à combustion. Il est toutefois nécessaire de préchauffer le substrat, comme indiqué préalablement, à une température supérieure ou égale à la température d'accrochage et de moduler la puissance engendrée dans le plasma suivant la nature du verre utilisée et la quantité de poudre introduite. Plusieurs plaquettes d'acier inoxydable 18/8 ont été ainsi revêtues sous une épaisseur de 350 µm par un verre de composition :

$AlF_3$ 30 % $ThF_4$ 20 % $YF_3$ 30 % $BaF_2$ 20 %

introduit sous forme de poudre d'une granulométrie de 100 µm.

Un quatrième procédé suivant l'invention consiste à disperser le verre pulvérulent à la surface de la pièce à revêtir, à chauffer l'ensemble à la température d'accrochage, puis à provoquer localement la fusion du verre au moyen d'un arc électrique mobile par rapport à la surface à revêtir. La distance entre l'arc et la surface est variable et dépend de la nature du verre, de l'épaisseur du revêtement et de la puissance de l'arc. Après fusion, la pièce est refroidie comme pour tous les autres procédés, rapidement jusqu'à la température de transition vitreuse, puis graduellement jusqu'à l'ambiante.

A titre d'illustration d'un mode de réalisation possible de ce procédé, un tube d'aluminium de diamètre de 15 cm et de longueur 45 cm, a, dans un premier temps, été enduit intérieurement d'une couche uniforme d'un verre de composition :

$ZrF_4$ 50 % $BaF_2$ 20 % NaF 22,5 % $ThF_4$ 7,5 %

Pour la mise en œuvre du procédé, ce verre, d'une granulométrie initiale de 80 µm, a été mélangé à du trichloréthylène de façon à former une barbotine qui a ensuite été appliquée uniformément à l'intérieur du cylindre, puis séchée. Le tube préchauffé à 400 °C a été fixé à un dispositif d'entraînement lui conférant une vitesse de rotation de 50 t/mn. Un dispositif d'arc électrique entre deux électrodes de graphite a été approché à 15 mm environ de la surface interne, puis déplacé linéairement parallèlement à la génératrice du cylindre, à une vitesse de 0,2 cm/s. Le revêtement obtenu présente un aspect largement vitreux et un comportement satisfaisant sous haute tension électrique.

Encore un autre procédé suivant l'invention tire parti de la relative volatilité des verres de fluorures au-dessus de leur point de fusion. Il consiste à vaporiser le verre et à le condenser sur la surface que l'on cherche à revêtir. Afin d'éviter la pollution par les éléments atmosphériques, et en raison des tensions de vapeur assez réduites des mélanges de fluorures fondus, il est préférable, en pratique, d'opérer sous vide. Des couches vitreuses, d'épaisseur variable et ajustable, peuvent ainsi être déposées sur des substrats de toutes natures en chauffant le verre au-delà de la fusion dans une enceinte sous vide. L'obtention d'un émaillage convenable reste toutefois subordonnée au préchauffage du substrat à une température adaptée. Un avantage particulier de ce dernier procédé c'est qu'il rend concevable l'émaillage de substrats thermiquement fragiles. En dehors des critères physiques classiques de compatibilité, il suffit

en effet que la température d'accrochage, seuil thermodynamique de la formation de l'interface substrat/verre, se situe au-dessous de la température de dégradation du matériau à revêtir. Par ailleurs, l'effet de trempe est particulièrement marqué, ce qui permet d'obtenir des dépôts totalement vitreux à partir de compositions peu stables.

A titre d'exemple, une plaquette de cuivre de 5 cm × 5 cm a été recouverte d'une couche de 100 nm d'un verre de composition :

$$ZrF_4 \ 62\% \qquad BaF_2 \ 32\% \qquad LaF_3 \ 6\%$$

chauffé au-delà de la fusion, dans une enceinte dont le vide initial était de $1,3 \ 10^{-3}$ Pa. La plaquette de cuivre a été préchauffée à une température de 400 °C environ.

Dans un mode particulier de réalisation, le substrat présente une structure non compacte. Il peut ainsi consister en une association de fibres, de lamelles ou d'agrégats, destinée à être ultérieurement enrobée de verre. L'utilisation d'une toile métallique comme substrat permet la réalisation de pièces de masse importante supportant mieux que du verre massif les chocs mécaniques et thermiques.

A titre d'exemple, une cuve parallélépipédique, de dimensions $6 \times 5 \times 5$ cm a été obtenue en associant une toile d'aluminium tressée avec du fil de diamètre 0,6 mm avec une ouverture de maille de 2,5 mm, et un verre de composition :

$$ZrF_4 \ 57\% \qquad BaF_2 \ 34\% \qquad LaF_3 \ 5\% \qquad AlF_3 \ 4\%$$

L'invention permet enfin de déposer des couches vitreuses de composition variable sur un autre support vitreux, lequel peut, par exemple, être un verre au tétrafluorure de zirconium ou un verre de chalcogénures. Ainsi, par le procédé de dépôt en phase vapeur décrit précédemment, on peut obtenir une variation continue d'indice depuis la surface du dépôt jusqu'à celle de la pièce vitreuse d'origine, en faisant varier continûment la composition de la phase vapeur. Un ajustage convenable permet ainsi de réaliser des préformes cylindriques à gradient d'indice à partir desquelles des fibres optiques peuvent être élaborées.

Les matériaux ainsi obtenus peuvent être utilisés dans de nombreux secteurs en raison de leurs propriétés physiques spécifiques. Ils peuvent servir d'isolant électrique, même avec un revêtement en couche très mince, ce qui autorise leur emploi en électronique miniaturisée. Leur exceptionnelle inertie chimique aux agents chimiques les plus corrosifs permet leur utilisation en génie chimique. Des applications électrochimiques sont possibles pour des verres présentant une certaine conductivité ionique, soit comme générateur électrochimique, soit comme membrane spécifique. Le dépôt de couches minces peut aussi servir à protéger des composants optiques fragiles opérant dans l'infrarouge ou l'ultra-violet.

**Revendications**

1. Procédé d'émaillage d'un substrat cristallin, vitreux, céramique ou métallique avec un verre fluoré ne contenant comme anions que l'anion $F^-$, caractérisé en ce qu'à l'application sur le substrat, le verre fluoré est à l'état fondu ou vaporisé à une température supérieure ou égale à la température de liquidus et en ce que le substrat est maintenu à une température aussi proche que possible, par excès, de la température de transition vitreuse du verre fluoré.

2. Procédé d'émaillage d'un substrat en aluminium suivant la revendication 1, caractérisé en ce que le substrat est préchauffé à 340 °C environ et plongé dans un bain de verre fluoré de composition :

$$ZrF_4 \ 54\% \quad BaF_2 \ 29\% \quad LaF_3 \ 3\% \quad NaF \ 10\% \quad AlF_3 \ 4\%$$

porté à 570 °C environ.

3. Procédé d'émaillage d'un substrat en métal léger du genre aluminium suivant la revendication 1, caractérisé en ce que le substrat est préchauffé à 400 °C environ, puis passé à travers le fond d'un creuset contenant un bain de verre fluoré de composition :

$$ZrF_4 \ 57\% \quad BaF_2 \ 34\% \quad LaF_3 \ 5\% \quad AlF_3 \ 4\%$$

porté à 620 °C environ.

4. Procédé d'émaillage d'un substrat en acier suivant la revendication 1, caractérisé en ce que le substrat est chauffé à 420 °C environ et en ce que le verre fluoré de composition :

$$AlF_3 \ 30\% \quad YF_3 \ 30\% \quad BaF_2 \ 20\% \quad ThF_4 \ 20\%$$

est appliqué sur une partie au moins de la surface du substrat, ledit verre fluoré étant à 800 °C environ.

5. Procédé d'émaillage suivant l'une des revendications 1 à 4, caractérisé en ce que le verre fluoré est dispersé sous forme de fines gouttelettes qui sont projetées sur le substrat, la dispersion du verre fluoré étant réalisée au moyen d'un flux gazeux chaud entraînant le verre fluoré fondu provenant d'un réservoir chauffé à travers un dispositif où s'opère le mélange des flux gazeux et liquide.

6. Procédé d'émaillage suivant la revendication 5, caractérisé en ce que le gaz est de l'air déshydraté ou un gaz neutre du genre azote ou gaz rare.

7. Procédé d'émaillage suivant l'une des revendications 1 à 4, caractérisé en ce que le verre fluoré est introduit à l'état de poudre qui est portée à la fusion immédiatement avant d'être projetée sur le substrat, la fusion de la poudre de verre fluoré étant obtenue par introduction dans la flamme d'une torche à combustion.

8. Procédé d'émaillage suivant la revendication 7, caractérisé en ce que des hydrocarbures substitués en halogènes sont introduits dans le flux gazeux de la torche de combustion.

**Claims**

1. A process for enameling a crystalline, vitreous, ceramic or metal substrate with a fluoride glass including no other anion than anion $F^-$, characterized in that when applied to the substrate, the fluoride glass is being in melt or vapour condition at a temperature higher than or equal to the melting temperature of said fluoride glass and in that said substrate is kept at a temperature as close as possible to, but higher than, the glassy transition temperature of said fluoride glass.

2. A process for enameling a substrate made of aluminium according to claim 1, characterized in that said substrate is preheated at about 340 °C and plunged into a bath made of a fluoride glass heated at about 570 °C and having a composition of :

$$ZrF_4 \ 54 \ \% \ BaF_2 \ 29 \ \% \ LaF_3 \ 3 \ \% \ NaF \ 10 \ \% \ AlF_3 \ 4 \ \%$$

3. A process for enameling a substrate made of light metal, such as aluminium, according to claim 1, characterized in that said substrate is preheated at about 400 °C, then passed through the bottom of a crucible containing a bath of a fluoride glass heated at about 620 °C and having a composition of :

$$ZrF_4 \ 57 \ \% \ BaF_2 \ 34 \ \% \ LaF_3 \ 5 \ \% \ AlF_3 \ 4 \ \%$$

4. A process for enameling a substrate made of steel according to claim 1, characterized in that said substrate is heated at about 420 °C and in that the fluoride glass having a composition of :

$$AlF_3 \ 30 \ \% \ YF_3 \ 30 \ \% \ BaF_2 \ 20 \ \% \ ThF_4 \ 20 \ \%$$

is applied at least to a portion of the substrate surface, said fluoride glass being heated at about 800 °C.

5. A process for enameling according to one of claims 1-4, characterized in that the fluoride glass is scattered as small droplets which are projected onto the substrate, the fluoride glass scattering being achieved by means of a hot gas flow drawing the molten fluoride glass from a heated container through a device wherein the mixing of gas and liquid flows is achieved.

6. A process for enameling according to claim 5, characterized in that the gas is dried air or a neutral gas such as nitrogen or a rare gas.

7. A process for enameling according to one of claims 1-4, characterized in that the fluoride glass is introduced as a powder which is melted immediately before being projected to the substrate, melting of said fluoride glass powder being achieved by passing it through the flame of a combustion gun.

8. A process for enameling according to claim 7, characterized in that halide substituted hydrocarbons are introduced into the gaseous flow of the combustion gun.

**Patentansprüche**

1. Verfahren zum Emaillieren von Substraten durch Fluorglas, das kein anderes Anion als das Anion $F^-$ enthält, dadurch gekennzeichnet, daß das Fluorglas beim Aufbringen auf das Substrat in geschmolzenem oder dampfförmigem Zustand ist mit einer Temperatur höher als oder gleich der Schmelztemperatur des Fluorglases, und daß das Substrat auf einer Temperatur gehalten wird, die so nahe wie möglich bei der Glas-Übergangstemperatur des Fluorglases liegt, jedoch höher als diese ist.

2. Verfahren zum Emaillieren eines Substrates aus Aluminium nach Anspruch 1, dadurch gekennzeichnet, daß das Substrat auf etwa 340 °C vorgewärmt und in ein Bad aus Fluorglas eingetaucht wird, das auf etwa 570 °C erwärmt ist und etwa folgende Zusammensetzung hat : $ZrF_4$ 54 % $BaF_2$ 29 % $LaF_3$ 3 % NaF 10 % $AlF_3$ 4 %.

3. Verfahren zum Emaillieren eines Substrates aus Leichtmetall, z. B. Aluminium, nach Anspruch 1, dadurch gekennzeichnet, daß das Substrat auf etwa 400 °C vorgewärmt wird, daß es dann über den Boden eines Tiegels geführt wird, der ein Bad aus Fluorglas enthält, das auf etwa 620 °C erwärmt ist und etwa folgende Zusammensetzung hat : $ZrF_4$ 57 % $BaF_2$ 34 % $LaF_3$ 5 % $AlF_3$ 4 %.

4. Verfahren zum Emaillieren eines Substrates aus Stahl nach Anspruch 1, dadurch gekennzeichnet, daß das Substrat auf etwa 420 °C erwärmt wird, und daß das Fluorglas, das eine Zusammensetzung von etwa $AlF_3$ 30 % $YF_3$ 30 % $BaF_2$ 20 % $ThF_4$ 20 % hat, wenigstens auf einen Teil der Substratoberfläche aufgebracht wird und daß das Fluorglas auf etwa 800 °C erwärmt ist.

5. Verfahren zum Emaillieren nach einem der Ansprüche 1-4, dadurch gekennzeichnet, daß das Fluorglas in Form kleiner Tröpfchen zersprüht wird, welche auf das Substrat aufgebracht werden, und daß das Zersprühen des Fluorglases mittels eines Heißgasstromes durchgeführt wird, der das schmelzflüssige Fluorglas aus einem erhitzten Behälter ab und durch ein Gerät führt, in welchem Gas und Flüssigkeit gemischt werden.

6. Verfahren zum Emaillieren nach Anspruch 5, dadurch gekennzeichnet, daß das Gas getrocknete Luft oder ein neutrales Gas, wie Stickstoff oder ein Edelgas ist.

7. Verfahren zum Emaillieren nach einem der Ansprüche 1-4, dadurch gekennzeichnet, daß das Fluorglas in Form eines Pulvers zugeführt wird, das unmittelbar vor dem Aufbringen auf das Substrat geschmolzen wird, und daß das Schmelzen des Fluorglaspulvers bewirkt wird durch Einführen des Pulvers in die Flamme einer Verbrennungseinrichtung.

8. Verfahren zum Emaillieren nach Anspruch 7, dadurch gekennzeichnet, daß halogen-substituierte Kohlenwasserstoffe in den Gasstrom der Verbrennungseinrichtung eingeführt werden.

F I G 1

FIG 2